(19) **Europäisches Patentamt**
**European Patent Office**
**Office européen des brevets**

(11) **EP 2 924 405 B1**

(12) **EUROPEAN PATENT SPECIFICATION**

(45) Date of publication and mention
of the grant of the patent:
**26.04.2017 Bulletin 2017/17**

(51) Int Cl.:
***G01K 13/02*** (2006.01)       ***G01K 7/25*** (2006.01)
***G01F 1/68*** (2006.01)

(21) Application number: **13856314.3**

(86) International application number:
**PCT/JP2013/078899**

(22) Date of filing: **25.10.2013**

(87) International publication number:
**WO 2014/080723 (30.05.2014 Gazette 2014/22)**

(54) **INTAKE AIR TEMPERATURE SENSOR AND FLOW MEASUREMENT DEVICE**

ZULUFTTEMPERATURSENSOR UND DURCHSTRÖMUNGSMESSVORRICHTUNG

CAPTEUR DE TEMPÉRATURE D'AIR D'ADMISSION ET DISPOSITIF DE MESURE DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2012 JP 2012255830**

(43) Date of publication of application:
**30.09.2015 Bulletin 2015/40**

(73) Proprietor: **Hitachi Automotive Systems, Ltd.
Hitachinaka-shi, Ibaraki 312-8503 (JP)**

(72) Inventors:
• **MATSUMOTO Masahiro**
  **Tokyo 100-8280 (JP)**
• **NAKANO Hiroshi**
  **Tokyo 100-8280 (JP)**
• **HANZAWA Keiji**
  **Hitachinaka-shi**
  **Ibaraki 312-8503 (JP)**
• **ASANO Satoshi**
  **Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
**EP-A2- 2 482 050      WO-A1-91/08441
JP-A- S5 868 633      JP-A- 2008 014 774
JP-U- S 618 846        JP-U- S6 035 213
US-A- 6 033 109**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an intake air temperature sensor for detecting intake temperatures and a flow measurement device equipped with the intake air temperature sensor.

Background Art

Conventionally, a resistance value measuring device, an integrated circuit for resistance measurement and a resistance measuring method described in JP-A No. 2005-3596 (Patent Literature 1) are known.
In this resistance value measuring device, a thermistor whose resistance value varies with the temperature and a reference resistor having a highly accurate resistance value are disposed outside an IC (integrated circuit). The thermistor is connected to channel CH1 of an A/D converter provided within the IC, and the reference resistor is electrically connected to channel CHref of the A/D converter. On the way of electric wiring for connecting the thermistor to the channel CH1, a pull-up resistor R1 is connected via a switch SW1. On the way of electric wiring for connecting the reference resistor to channel CHref, electric wiring tapped from the connecting part between the switch SW1 and the pull-up resistor R1 is connected via a switch SW2. The pull-up resistor R1, the switch SW1 and the switch SW2 are disposed within the IC.
At normal times, the switch SW1 is on and the switch SW2 is off, and the voltage at the connection point between the switch SW1 and the thermistor is inputted to channel CH1 of the A/D converter. At the time of correcting the resistance value of the pull-up resistor R1, the switch SW1 is turned off and the switch SW2 is turned on, and the voltage at the connection point between the switch SW2 and the reference resistor is inputted to channel CHref of the A/D converter. This resistance value measuring device can figure out the resistance value of the thermistor highly accurately by calculating the voltage inputted to channel CH1 and the voltage inputted to channel CHref even if the resistance value of the pull-up resistor R1 fluctuates or temperature characteristics cause the resistance value to vary (see the Abstract).
Patent document EP2482050 A2 discloses an intake air temperature sensor capable of detecting an intake air temperature highly accurately and at high speed. The intake air temperature sensor includes: a secondary passage taking in an intake airflow; a flow rate detecting element disposed in the secondary passage; an intake air temperature detecting element provided outside the secondary passage; a temperature sensor detecting a temperature of a fitting section of the intake air temperature detecting element; a circuit board disposed in a casing; and an integrated circuit applying a correction process to an output of the intake air temperature detecting element on the basis of signals output from the temperature sensor and a flow rate detecting element.
Patent document US 6033109 A discloses a device for converting voltages to temperature values by using a thermistor. The device utilizes a voltage-temperature cross-reference table and a temperature-increment table to carry out the conversion instead of using the conventional one-to-one voltage-temperature table, thereby reducing the required capacity of RAM and ROM and the fabrication cost. The thermistor is disposed at the place where the temperature is to be measured, and the voltage across the thermistor varies with respect to changes of temperature. An analog-to-digital converter receives the voltage of the thermistor and transforms it into digital output. A first multiplexer decodes the higher bit portion of the digital output thereby selecting a corresponding temperature from a voltage-temperature cross-reference table as a rough temperature. A second multiplexer decodes the higher bit portion of the digital output thereby selecting a corresponding temperature increment from a temperature-increment table as a temperature step. A multiplier multiplies the lower bit portion of the digit output by the temperature step to obtain a fine temperature. An adder adds the fine temperature to the rough temperature to output a practical temperature value.
Patent document WO 91/08441 A1 discloses a device for improving the precision of measurement determination by a sensor whose sensitivity changes as a function of the parameter measured. Connected between the sensor and the power supply are electronic components which are controlled by a computing device in such a way that the voltage at the sensor has a value which ensures that the sensor is operated in a region of maximum sensitivity. The sensor is an NTC or PTC resistance used to determine temperature

Citation List

Patent Literature

Patent Literature 1: JA- No. 2005-3596

Summary of Invention

Technical Problem

According to the background art described in Patent Literature 1, the pull-up resistor R1 (fixed resistor) connected in series to the thermistor by turning-on of the switch SW1 can be integrated into an integrated circuit. However, the reference resistor is not integrated into the integrated circuit, and its integration into any integrated circuit was difficult. The turning-on resistances of the switches SW1 and SW2, which are to be connected in series to the pull-up resistor R1 by changing over the thermistor and the reference resistor should be sufficiently lower than the resistance of the thermistor, and this invites an increase in the integrated circuit size. Especially, when a thermistor is used, the resistance is lower at a high temperature by about a two-digit factor than at normal temperature. For this reason, when use at a high temperature is considered, the size of the change-over switch should be sufficiently large, and the turning-on resistance should be sufficiently low. Furthermore, where the change-over switch is configured of a semiconductor switch, the turning-on resistance of the change-over switch increases at a high temperature. These variations of the turning-on resistance may cause an error to occur in measuring the resistance value of the thermistor.

For instance, an intake air temperature sensor can be configured of the thermistor and the pull-up resistor (fixed resistor) mentioned above. Whereas the thermistor in this case is used as a temperature sensing element, the usable temperature sensing element is not limited to a thermistor, but any element whose resistance value would vary with temperature can be used.

An object of the present invention is to integrate the fixed resistor to be connected in series to the temperature sensing element into an integrated circuit and to make dispensable the reference resistor and the change-over switch for connecting the fixed resistor to this reference resistor thereby to provide a more compact and highly accurate intake air temperature sensor.

Solution to Problem

To solve the problem described above, an intake air temperature sensor according to the present invention has a temperature sensing element whose resistance value varies with the intake temperature; an integrated circuit that processes signals of the temperature sensing element; a resistive element integrated into the integrated circuit and connected in series to the temperature sensing element; and a writable memory that stores information regarding the resistance value of the resistive element, and the object is achieved by correcting signals detected by the temperature sensing element on the basis of the information stored in the writable memory. At this time, it is recommended to correct the curvature of the characteristics curve of signals detected by the temperature sensing element.

Advantageous Effects of Invention

According to the present invention, it is possible to correct fluctuations of the resistance value of the resistive element integrated into the integrated circuit and connected in series to the temperature sensing element, and thereby to eliminate the need to provide a reference resistor for correcting the resistance value of the resistive element. As a result, it is possible to provide a compact and highly accurate intake air temperature sensor in which a resistive element is integrated into an integrated circuit.

Other problems, configurative aspects and advantageous effects will become more apparent from the following description of embodiments.

Brief Description of Drawings

Fig. 1 is a diagram showing the configuration of an intake air temperature sensor, which is a first embodiment of the present invention.
Fig. 2 is a diagram showing the relationship between the intake temperature and Vsen/Vref.
Fig. 3 is a diagram showing the input/output characteristics of a bending correction processing 6.
Fig. 4 is a diagram showing the configuration of a sensor device, which is a second embodiment of the present invention.
Fig. 5 is a diagram showing the input/output characteristics of the bending correction processing 6 and of a linearization processing 8.
Fig. 6 is a diagram showing the configuration of a sensor device, which is a third embodiment of the present invention.
Fig. 7 is a diagram showing the pattern of a resistive element 3.

Fig. 8 is a diagram showing the configuration of an air flow measurement device using the intake air temperature sensor of the third embodiment as an example of sensor device.

Fig. 9 is a detailed diagram showing in detail the configuration of a flow rate detecting unit composed of an air flow rate detecting element 17 and an air flow rate signal adjusting unit 18.

Description of Embodiments

Embodiments of the present invention will be described below with reference to drawings.

First Embodiment

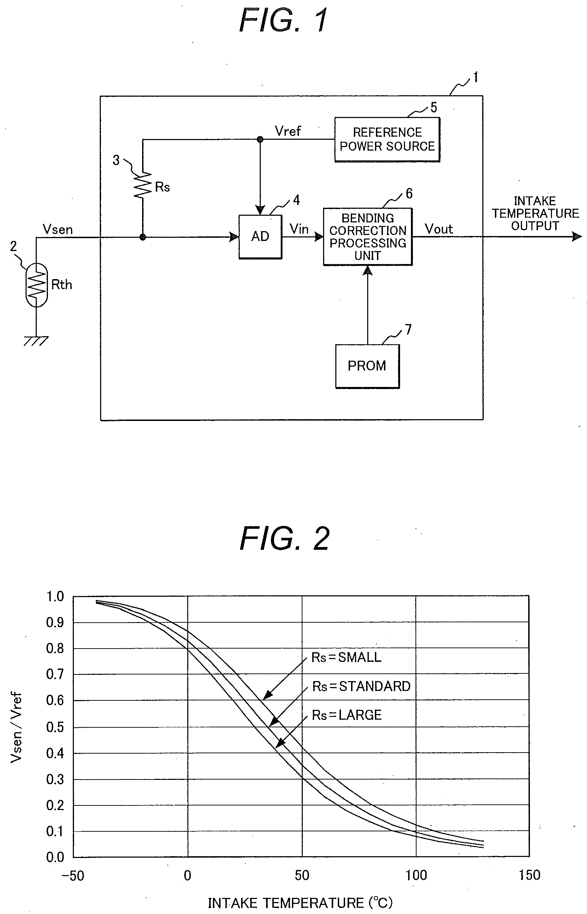

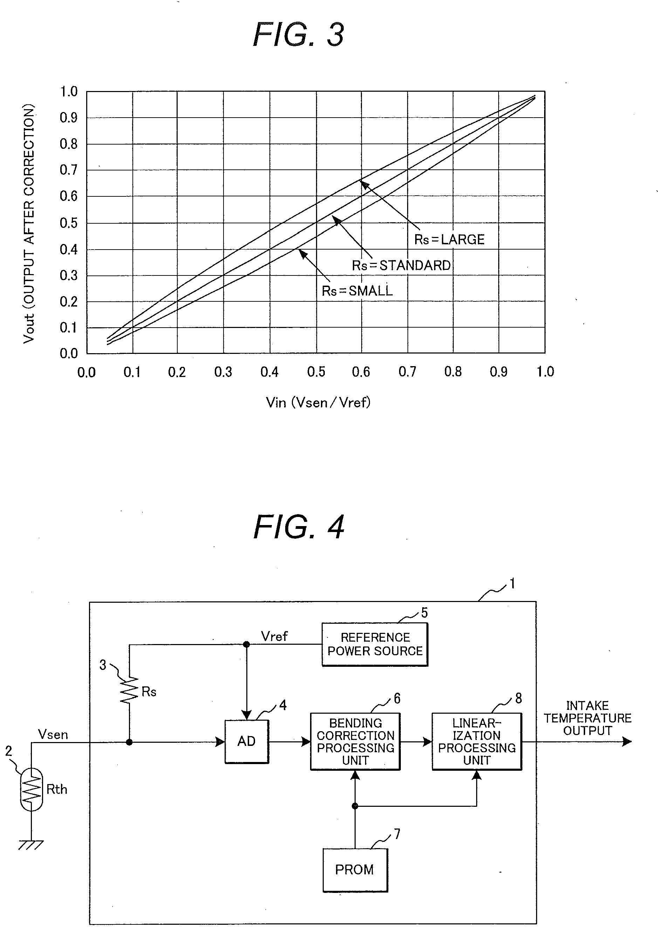

First, an intake air temperature sensor which is a first embodiment of the present invention will be described with reference to Figs. 1 through 3. Fig. 1 is a diagram showing the configuration of the intake air temperature sensor in this embodiment. Fig. 2 is a diagram showing the relationship between the intake temperature and Vsen/Vref. Fig. 3 is a diagram showing the input/output characteristics of a bending correction processing unit 6.

The intake air temperature sensor in this embodiment is configured of a temperature sensing element 2 whose resistance value varies with the intake temperature; an integrated circuit 1 that processes signals of the temperature sensing element 2; a resistive element 3 connected in series to the temperature sensing element 2 and integrated into the integrated circuit 1; an AD converter 4 that subjects signals detected by the temperature sensing element 2 (the end-to-end voltage of the temperature sensing element 2) to analog-to-digital conversion; a reference power source 5 that supplies a reference voltage Vref to the resistive element 3 and the AD converter 4; a writable memory 7 that stores information corresponding to the resistance value of the resistive element 3; and a bending correction processing unit 6 that subjects the output of the AD converter 4 to bending correction on the basis of information from the writable memory (PROM) 7 and outputs an intake temperature output. Whereas a thermistor, a platinum resistor or the like may be used as the temperature sensing element 2 whose resistance value varies with the intake temperature, the description of this embodiment will take up a thermistor as an example.

In this embodiment, the temperature sensing element 2 whose resistance value varies with the intake temperature and the resistive element 3 are connected in series, and the voltage Vref is supplied from the reference power source 5. At this time, whereas the ratio between the end-to-end voltage Vsen of the temperature sensing element 2 and Vref varies with the intake temperature as shown in Fig. 2, the characteristic (bending) varies under the influence of the resistance value Rs of the resistive element 3. In this embodiment, the voltage Vsen is digitized by the AD converter 4 that conducts analog-to-digital conversion with the voltage Vref as the reference voltage, and this digital value is subjected to bending correction in the curve shown in Fig. 3 on the basis of information from the writable memory 7. This bending correction is accomplished by the bending correction processing unit 6. The bending correction is intended to eliminate the influence of the resistance value Rs of the resistive element 3. The input/output characteristics of the bending correction processing unit 6 (characteristics shown in Fig. 3) can be represented by:

$$\text{Vout} = \text{Rs} \times \text{Vin}/\{\text{Rr} + \text{Vin} \times (\text{Rs} - \text{Rr})\} \quad \ldots \quad \text{Formula (1)}$$

where Vin is the input, Vout is the output, Rr is the reference resistance value of the resistive element 3, and Rs is the actual resistance value of the resistive element 3, and can be easily calculated by digital arithmetic operation.

Namely, by storing the actual resistance value Rs of the resistive element 3 in the writable memory 7, it is made possible to eliminate variations of characteristics due to fluctuations of the resistive element 3 by calculating Formula (1) on the basis of this information.

When bending correction is to be performed by using Formula (1), the input/output characteristics of the bending correction processing unit 6 are as shown in Fig. 3; if Rs is greater than its standard value, correction to give a curve a convex upward is performed in the input/output range of signals. In contrast, if Rs is smaller than the standard value, correction to give a curve a convex downward is performed in the input/output range of signals.

As shown in Fig. 3, the input/output characteristics of the bending correction processing unit 6 form a curve when Rs deviates from the standard value, deviating from the straight line formed when Rs is at the standard value. Namely, with these input/output characteristics, the bending correction processing unit 6 corrects, correspondingly to the extent of fluctuations from the standard value in Rs, the curvature of the characteristics curve that the output signal of the temperature sensing element 2 has with respect to the intake temperature. Even if Rs has fluctuations, coincidence with the characteristics curve of the standard value can be achieved by correcting the curvature of the characteristics curve.

Calculation of Formula (1) can also be done by utilizing a map. Further, though a PROM is used as the writable memory 7, the choice is not limited to a PROM, but any writable memory can be used.

Second Embodiment

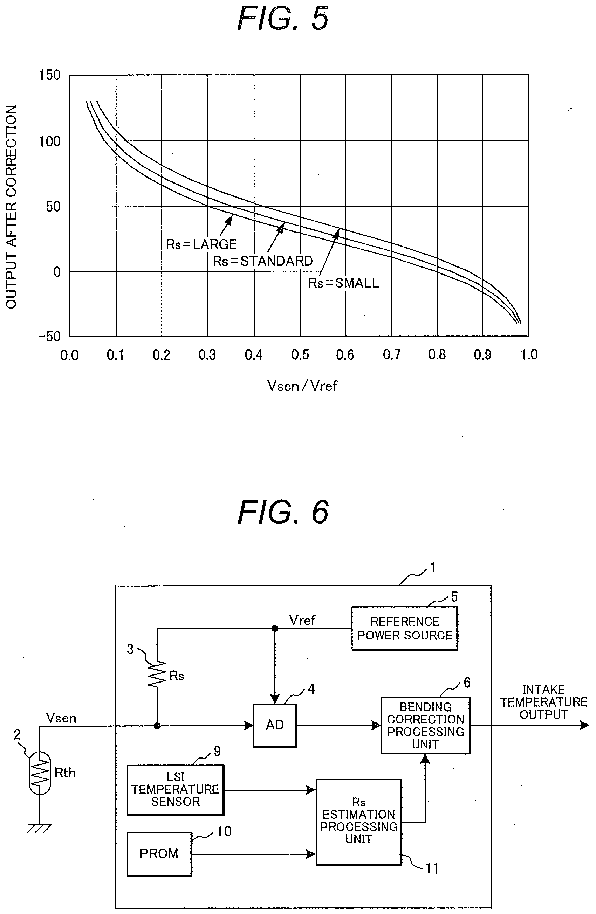

Next, a sensor device, which is a second embodiment of the present invention, will be described with reference to Figs. 4 and 5. Fig. 4 is a diagram showing the configuration of an intake air temperature sensor in this embodiment. Fig. 5 is a diagram showing the input/output characteristics of the bending correction processing unit 6 and of a linearization processing unit 8.
The intake air temperature sensor of this embodiment, though configured in basically the same way as the intake air temperature sensor of the first embodiment, is improved in the following respects. The same aspects of configuration as in the first embodiment are denoted by respectively the same reference signs, and their description will be dispensed with.
In this embodiment, by providing the linearization processing unit 8 after the bending correction processing unit 6, the non-linear characteristics relative to the intake temperature shown in Fig. 2 are linearized. When the resistance value Rs of the resistive element 3 varies, the input/output characteristics of the linearization processing unit 8 vary as shown in Fig. 5. When a thermistor is used as the temperature sensing element 2, as the characteristics of the thermistor constitute an exponential function, the linearization processing unit 8 uses map processing. The map used in this map processing represents the relationship between the inputs and the outputs of the linearization processing unit 8. Where map processing is used, extremely complex processing is needed because the map has to be altered with variations in the resistance value Rs (resistance variations with fluctuations of things and temperature variations). However, by correcting the curvature due to fluctuations of the resistive element 3 with the bending correction processing unit 6 in advance as in this embodiment, the linearization processing unit 8 can be realized by simple map calculation.
The map for use in map processing is stored in advance in the writable memory 7.

Third Embodiment

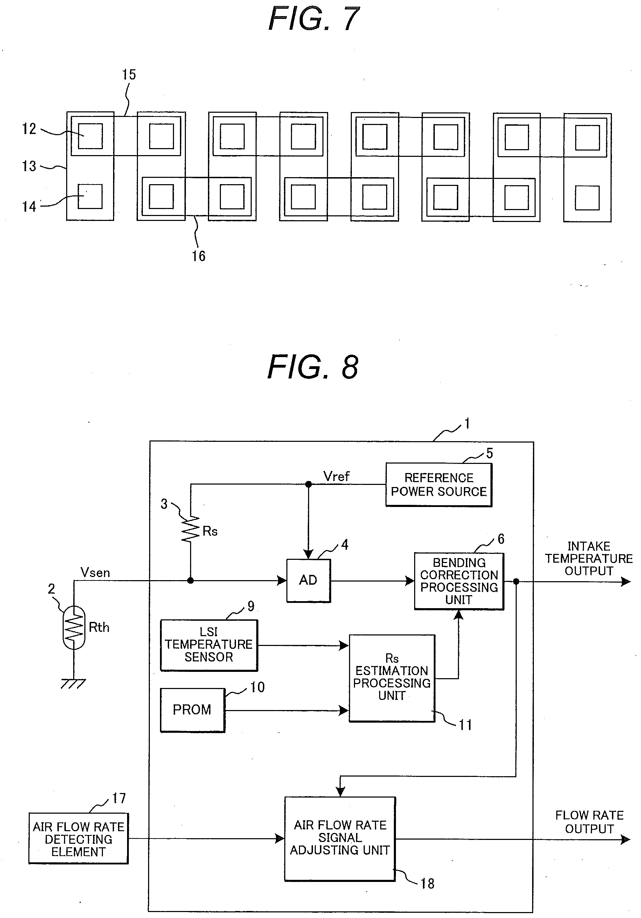

Next, an intake air temperature sensor, which is a third embodiment of the present invention will be described with reference to Figs. 6 and 7. Fig. 6 is a diagram showing the configuration of an intake air temperature sensor, which is the third embodiment of the invention. Fig. 7 is a diagram showing the pattern of the resistive element 3.
The intake air temperature sensor of this embodiment, though configured in basically the same way as the intake air temperature sensor of the first embodiment, is improved in the following respects. The same aspects of configuration as in other embodiments are denoted by respectively the same reference signs, and their description will be dispensed with.
This embodiment is provided with an integrated circuit temperature sensor (LSI temperature sensor) 9 for detecting the temperature of the integrated circuit 1; a writable memory 10 that stores information corresponding to the resistance value of the resistive element 3 and the temperature coefficient of resistance; and a resistance value estimating unit (Rs estimating unit) 11 that estimates the resistance value of the resistive element 3 on the basis of information stored in the integrated circuit temperature sensor 9 and the writable memory 10. The integrated circuit temperature sensor 9 and the resistive element 3 are arranged in proximity to each other to make the temperatures of the integrated circuit temperature sensor 9 and the resistive element 3 are substantially equal. In this case, that "the temperatures of the integrated circuit temperature sensor 9 and the resistive element 3 substantially equal" means that the temperature of the resistive element 3 can be detected by the integrated circuit temperature sensor 9 so that the resistance value of the resistive element 3 estimated by using the temperature detected by the integrated circuit temperature sensor 9 can be kept within a tolerable error range permitting use for bending correction by the bending correction processing unit 6.
Generally, a resistive element in an integrated circuit has a temperature coefficient of resistance of 1000 to 3000 ppm/°C. For this reason, as the temperature of the resistive element 3 may vary by 100°C or even more with a change in ambient temperature or self-heating of the integrated circuit 1, the resistance value of the resistive element 3 may vary by 10 to 30%. This would give rise to errors in outputs of the intake air temperature sensor. On account of this circumstance, in this embodiment, the writable memory 10 is caused to store information corresponding to the resistance value Rs of the resistive element 3 and to a temperature coefficient of resistance TCR, and the resistance value estimating unit processing 11 estimates the resistance value Rs of the resistive element 3 on the basis of this information. And implementation of bending correction by the bending correction processing unit 6 using the estimated resistance value Rs is intended to eliminate the influence of the resistance value Rs of the resistive element 3. The output Rs of the resistance value estimation processing unit 11 can be represented by

$$Rs = Rs0 \times \{1 + TCR \times TIsi\} \ldots \text{Formula (2)}$$

where Rs0 is the resistance value of the resistive element 3 at 0°C, TCR is the temperature coefficient of resistance of the resistive element 3, and Tlsi is the output of the integrated circuit temperature sensor 9, and can be easily calculated by digital arithmetic operation.

Namely, by storing the resistance value Rs0 of the resistive element 3 at 0°C and the temperature coefficient of resistance TCR in the writable memory 10, it is made possible to eliminate variations of characteristics of the intake air temperature sensor due to fluctuations of the resistive element 3 and resistance variations due to temperature variations by calculating Formula (2) on the basis of this information. This enables a fixed resistor and the like connected in series to the intake air temperature sensing element to be integrated into an integrated circuit.

Further in this embodiment, the pattern of the resistive element 3 is as shown in Fig. 7. The resistive element 3 is provided with a plurality of unit resistance patterns each including a diffusion area 13 and contacts 12 and 14, and configured by connecting these unit resistance patterns with aluminum wirings 15 and 16. Whereas the temperature coefficient of resistance of the diffusion area is 100 to 3000 ppm/°C, the temperature coefficient of resistance of the contacts has a negative value of -3000 ppm/°C. For this reason, a configuration of the resistive element 3 having a plurality of unit resistance patterns as in this embodiment can increase the influence of the contact resistance and decrease the temperature coefficient of resistance of the resistive element 3. As this can reduce temperature-dependent variations of the resistance value of the resistive element 3, the estimation accuracy of the resistance value estimation processing unit 11 can be enhanced, thereby making possible more accurate detection of the intake temperature.

Fourth Embodiment

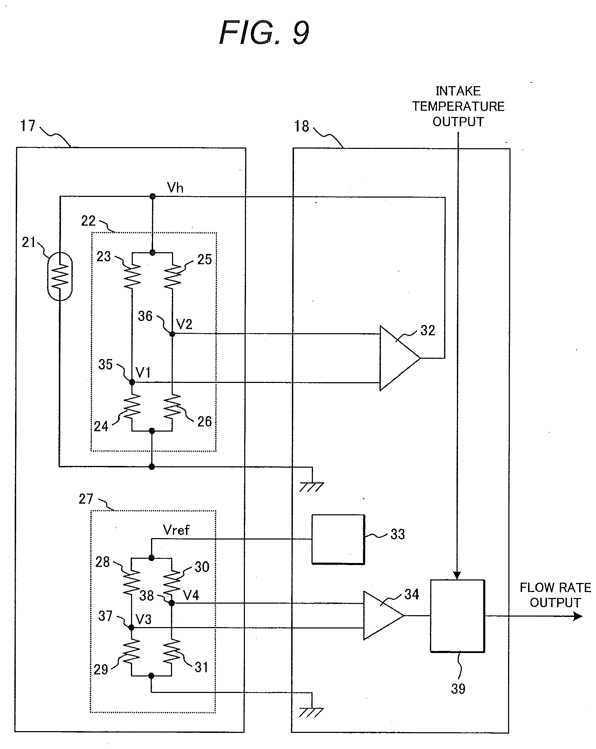

Next, as one embodiment of sensor device, an embodiment of air flow measurement device using the intake air temperature sensor of the third embodiment (fourth embodiment) will be described with reference to Figs. 8 and 9. Fig. 8 is a diagram showing the configuration of the air flow measurement device in this embodiment. Fig. 9 is a detailed diagram showing in detail the configuration of a flow rate detecting unit composed of an air flow rate detecting element 17 and an air flow rate signal adjusting unit 18.

The sensor device of this embodiment is provided with an intake air temperature sensor configured in basically the same way as the intake air temperature sensor of the third embodiment. Further in this embodiment, to configure an air flow measurement device, the air flow rate detecting element 17 for detecting the flow rate of the intake air and the air flow rate signal adjusting unit 18 built (integrated) into the integrated circuit 1 to adjust (process) the output of the air flow rate detecting element 17 and supply a flow rate output are provided.

Though this embodiment uses the device of the third embodiment as the intake air temperature sensor, the intake air temperature sensor of the first or second embodiment may as well be used.

The air flow measurement device of this embodiment is a thermal measurement device that measures the air flow by heating a heat generating element (heat generation resistor) by subjecting it to heating control. It is necessary for a thermal type air flow measurement device to detect the temperature of the flowing air, and the air temperature is detected by using the intake air temperature sensor described with respect to the aforementioned embodiment. In this embodiment, air (in particular, intake air taken into an internal combustion engine) is the object of measurement, but it may as well be a thermal type fluid flow measurement device whose object of measurement is some other fluid. Also, even if it is a non-thermal type fluid flow measurement device, the fluid temperature can be accurately detected and, moreover, the device can be reduced in size by combined use of the intake air temperature sensor of any of the foregoing embodiments when detecting the temperature of fluid. In the following description, the air flow measurement device, the air flow rate signal adjusting unit 18 and the air flow rate detecting element 17 will be referred to as a flow measurement device, a flow rate signal adjusting unit 18 and a flow rate detecting element 17, respectively.

The flow rate detecting element 17 is configured of a heat generating element 21, a heater temperature detecting bridge circuit 22 composed of a heater temperature detecting resistor 23 whose resistance value varies with the temperature of the heat generating element 21 and fixed resistors 24, 25 and 26, temperature detecting resistors 28 and 31 arranged upstream of the heat generating element 21 in air flow direction and temperature detecting resistors 29 and 30 arranged downstream, and a temperature difference detecting bridge circuit 9 for detecting the temperature difference between the upstream and downstream of the heat generating element 21. Further, in the flow rate signal adjusting unit 18 integrated into the integrated circuit 1, a differential amplifier 32 that supplies a drive voltage Vh to a heat generating element 2 in response to the output of the heater temperature detecting bridge circuit 22 and a differential amplifier 34 that generates a flow rate output in response to the output of the temperature difference detecting bridge circuit 9 are arranged.

The differential amplifier 32 amplifies the voltage difference between the voltage V1 of the connecting part 35 of the heater temperature detecting resistor 23 and the fixed resistor 24 and the voltage V2 of the connecting part 36 of the fixed resistor 25 and the fixed resistor 26 and thereby generates the drive voltage Vh to the heat generating element 2. The differential amplifier 34 amplifies the voltage difference between the voltage V3 of the connecting part 37 of the temperature detecting resistor 28 and the temperature detecting resistor 29 and the voltage V4 of the connecting part 38 of the temperature detecting resistor 30 and the temperature detecting resistor 31 and thereby generates a flow rate output.

The flow rate signal adjusting unit 18 is provided with a flow rate signal processing unit 39, including an arithmetic unit, for performing correction or adjustment of the output of the differential amplifier 34. The correction and adjustment performed by the flow rate signal processing unit 39 include signal linearization processing and correction processing applied to various error factors. The detected flow rate signal may be affected by the intake temperature. Flow rate signals detected by using a heat generation resistor are particularly vulnerable to the influence of the intake temperature. In view of this circumstance, the intake temperature output of the intake air temperature sensor is inputted to the flow rate signal processing unit 39 and, after compensating and adjusting the output of the differential amplifier 34 for the influence of the intake temperature with the flow rate signal processing unit 39, the result is supplied as the flow rate output.

For the flow rate detecting element 17 using a heat generating element, besides the configuration described above, there also are elements in which the configuration of the heat generating element or the bridge circuit is altered, and a flow rate detecting element of some other configuration may as well be used.

As this embodiment has a very accurately adjusted intake temperature output signal, the air flow rate signal can be very accurately adjusted by using this intake temperature output signal.

According to any of the embodiments described above, there is no need to use a resistive element of particularly high accuracy as the resistive element to be connected in series to the temperature sensing element, and the resistive element can be integrated into the integrated circuit. No reference resistor for correcting the resistance value of the resistive element is needed either. In this way, a compact and highly accurate intake temperature sensor in which the resistive element is integrated into the integrated circuit can be provided.

The present invention is not limited to the embodiments described above, but may include various modifications. For instance, the embodiments are intended as cases for detailed description to make the present invention readily understandable, but they are not limited to full configurations. It is also possible to replace a part of the configuration of an embodiment with a part of the configuration of another embodiment, or it is possible to add to the configuration of one embodiment the configuration of another embodiment. Further, to, from or for a part of the configuration of any embodiment, an element of another configuration can be added, deleted or substituted, respectively. For instance, the linearization processing unit 8 described with reference to the second embodiment can be added to the third and fourth embodiments.

Also, the configurations, functions, processing units, processing means and so forth described above can be realized with hardware by, for instance, designing part or whole of them as an integrated circuit. Further, the configurations, functions and so forth described above can be realized with software by having a processor interpret and execute program for realizing their respective functions. Information for realizing the functions such as programs, tables and files can be placed in a recording device such as a memory, hard disk or an SSD (Solid State Drive), or a recording medium such as an IC card, an SD card or a DVD.

Further, the control lines and information lines referred to above are those necessary for the descriptive purpose, but not all the control lines and information lines in the product are referred to. For practical purposes, almost all the elements of configuration can be regarded as being connected to one another.

Reference Signs List

1 ...     Integrated circuit,
2 ...     Temperature sensing element,
3 ...     Resistive element,
4 ...     AD converter,
5 ...     Reference power source,
6 ...     Bending correction processing unit,
7 ...     Writable memory,
8 ...     Linearization processing unit,
9 ...     Integrated circuit temperature sensor,
10 ...    Writable memory,
11 ...    Resistance value estimation processing unit,
12 ...    Contact,
13 ...    Diffusion area,
14 ...    Contact,
15 ...    Aluminum wiring,
16 ...    Aluminum wiring,

17 ...    Air flow rate detecting element, and
18 ...    Air flow rate signal adjusting unit.

**Claims**

1.  An intake air temperature sensor comprising:

    a temperature sensing element (2) whose resistance value varies with the intake temperature;
    an integrated circuit (1) electrically connected to the temperature sensing element (2);
    a resistive element (3) connected in series to the temperature sensing element (2); and
    a correction processing unit (6) that corrects, on the basis of corrective information, errors based on the resistance value of the resistive element (3) contained in an output signal of the temperature sensing element (2)
    **characterized in that** the resistive element (3) is integrated into the integrated circuit (1);
    and **in that** the intake air temperature sensor further comprises a writable memory (7) that stores the corrective information corresponding to the resistance value of the resistive element (3).

2.  The intake air temperature sensor according to Claim 1,
    wherein the correction processing unit (6) corrects the curvature of the characteristics curve of the output signal of the temperature sensing element (2) relative to the intake temperature.

3.  The intake air temperature sensor according to Claim 2, comprising
    a linearization processing unit (8) that stores linearizing information for linearizing the characteristics curve in the writable memory (7) and linearizes the characteristics curve on the basis of the linearizing information stored in the writable memory (7).

4.  The intake air temperature sensor according to Claim 2, comprising
    an integrated circuit (1) temperature sensor for detecting the temperature of the integrated circuit (1) and a resistance value estimation processing unit (11) for estimating the resistance value of the resistive element (3) from an output of the integrated circuit (1) temperature sensor,
    wherein the correction processing unit (6) corrects the curvature of the characteristics curve on the basis of an output from the resistance value estimation processing unit (11).

5.  The intake air temperature sensor according to Claim 4,
    wherein information corresponding to the temperature coefficient of resistance of the resistive element (3) is stored in the writable memory (7).

6.  The intake air temperature sensor according to Claim 4,
    wherein the integrated circuit (1) temperature sensor is arranged in proximity to the resistive element (3) so that the integrated circuit (1) temperature sensor is arranged in a position where the temperature detected by the integrated circuit (1) temperature sensor is substantially equal to the temperature of the resistive element (3).

7.  The intake air temperature sensor according to Claim 2,
    wherein the resistive element (3) is configured of a plurality of unit resistors each configured of a diffusion area and a contact (12) being connected in series.

8.  A flow measurement device that subjects a heat generation resistor to heating control and detects a flow rate of fluid flowing in the surroundings of the heat generation resistor, comprising:

    the intake air temperature sensor according to any one of Claims 1 to 7; and
    an air flow rate signal adjusting unit (18) that adjusts the flow rate output by using an output of the intake air temperature sensor.

**Patentansprüche**

1.  Einlasslufttemperatur-Sensor, der Folgendes umfasst:

ein Temperaturerfassungselement (2), dessen Widerstandswert sich mit der Einlasstemperatur ändert;
eine integrierte Schaltung (1), die mit dem Temperaturerfassungselement (2) elektrisch verbunden ist;
ein Widerstandselement (3), das mit dem Temperaturerfassungselement (2) in Reihe geschaltet ist; und
eine Korrekturverarbeitungseinheit (6), die anhand von Korrekturinformationen Fehler anhand des Widerstandswerts des Widerstandselements (3), die in einem Ausgangssignal des Temperaturerfassungselements (2) enthalten sind, korrigiert,
**dadurch gekennzeichnet, dass**
das Widerstandselement (3) in die integrierte Schaltung (1) integriert ist; und
dass der Einlasslufttemperatur-Sensor ferner einen beschreibbaren Speicher (7) umfasst, der die Korrekturinformationen speichert, die dem Widerstandswert des Widerstandselements (3) entsprechen.

2. Einlasslufttemperatur-Sensor nach Anspruch 1,
wobei die Korrekturverarbeitungseinheit (6) die Krümmung der Kennlinie des Ausgangssignals des Temperaturerfassungselements (2) relativ zu der Einlasstemperatur korrigiert.

3. Einlasslufttemperatur-Sensor nach Anspruch 2, der Folgendes umfasst:

eine Linearisierungsverarbeitungseinheit (8), die Linearisierungsinformationen speichert, um die Kennlinie in
dem beschreibbaren Speicher (7) zu linearisieren, und die Kennlinie anhand der in dem beschreibbaren Speicher
(7) gespeicherten Linearisierungsinformationen linearisiert.

4. Einlasslufttemperatur-Sensor nach Anspruch 2, der Folgendes umfasst:

einen Temperatursensor der integrierten Schaltung (1), um die Temperatur der integrierten Schaltung (1) zu
detektieren, und eine Widerstandswert-Schätzverarbeitungseinheit (11), um den Widerstandswert des Widerstandselements (3) anhand eines Ausgangs des Temperatursensors der integrierten Schaltung (1) zu schätzen,
wobei die Korrekturverarbeitungseinheit (6) die Krümmung der Kennlinie anhand eines Ausgangs der Widerstandswert-Schätzverarbeitungseinheit (11) korrigiert.

5. Einlasslufttemperatur-Sensor nach Anspruch 4,
wobei Informationen, die dem Temperaturkoeffizienten des Widerstands des Widerstandselements (3) entsprechen,
in dem beschreibbaren Speicher (7) gespeichert sind.

6. Einlasslufttemperatur-Sensor nach Anspruch 4,
wobei der Temperatursensor der integrierten Schaltung (1) in der Nähe des Widerstandselements (3) angeordnet
ist, so dass der Temperatursensor der integrierten Schaltung (1) an einer Position angeordnet ist, an der die durch
den Temperatursensor der integrierten Schaltung (1) detektierte Temperatur im Wesentlichen gleich der Temperatur
des Widerstandselements (3) ist.

7. Einlasslufttemperatur-Sensor nach Anspruch 2,
wobei das Widerstandselement (3) aus mehreren Einheitswiderständen konfiguriert ist, wovon jeder aus einem
Diffusionsbereich und einem Kontakt (12), die in Reihe geschaltet sind, konfiguriert ist.

8. Durchflussmessvorrichtung, die einen Wärmeerzeugungswiderstand einer Heizsteuerung unterwirft und eine Durchflussmenge von Fluid, das in der Umgebung des Wärmeerzeugungswiderstands strömt, detektiert und Folgendes
umfasst:

den Einlasslufttemperatur-Sensor nach einem der Ansprüche 1 bis 7; und
eine Durchflussmengensignal-Einstelleinheit (18), die den Durchflussmengenausgang unter Verwendung eines
Ausgangs des Einlasslufttemperatur-Sensors einstellt.

**Revendications**

1. Capteur de température d'air admis, comprenant :

un élément détecteur de température (2) dont la valeur de résistance varie avec la température à l'admission ;
un circuit intégré (1) électriquement connecté à l'élément détecteur de température (2) ;

un élément résistif (3) connecté en série à l'élément détecteur de température (2) ; et

une unité de traitement de correction (6) qui corrige, sur la base d'une information de correction, des erreurs basées sur la valeur de résistance de l'élément résistif (3) contenue dans un signal de sortie de l'élément détecteur de température (2),

**caractérisé en ce que**

l'élément résistif (3) est intégré dans le circuit intégré (1) ; et

**en ce que** le capteur de température d'air admis comprend en outre une mémoire inscriptible (7) qui stocke l'information de correction correspondant à la valeur de résistance de l'élément résistif (3).

2. Capteur de température d'air admis selon la revendication 1,

dans lequel l'unité de traitement de correction (6) corrige la courbure de la courbe caractéristique du signal de sortie de l'élément détecteur de température (2) par rapport à la température à l'admission.

3. Capteur de température d'air admis selon la revendication 2, comprenant

une unité de traitement de linéarisation (8) qui stocke une information de linéarisation pour linéariser la courbe caractéristique dans la mémoire inscriptible (7) est qui linéarise la courbe caractéristique sur la base de l'information de linéarisation stockée dans la mémoire inscriptible (7).

4. Capteur de température d'air admis selon la revendication 2, comprenant

un capteur de température de circuit intégré (1) pour détecter la température du circuit intégré (1) et une unité de traitement d'estimation de valeur de résistance (11) pour estimer la valeur de résistance de l'élément résistif (3) depuis une sortie du capteur de température de circuit intégré (1),

dans lequel l'unité de traitement de correction (6) corrige la courbure de la courbe caractéristique sur la base d'une sortie venant de l'unité de traitement d'estimation de valeur de résistance (11).

5. Capteur de température d'air admis selon la revendication 4,

dans lequel l'information correspondant au coefficient de température de la résistance de l'élément résistif (3) est stockée dans la mémoire inscriptible (7).

6. Capteur de température d'air admis selon la revendication 4,

dans lequel le capteur de température de circuit intégré (1) est agencé à proximité de l'élément résistif (3) de telle façon que le capteur de température de circuit intégré (1) est agencé à une position à laquelle la température détectée par le capteur de température de circuit intégré (1) est sensiblement égale à la température de l'élément résistif (3).

7. Capteur de température d'air admis selon la revendication 2,

dans lequel l'élément résistif (3) est configuré d'une pluralité de résistances unitaires, configurées chacune d'une zone de diffusion et d'un contact (12) qui sont connectés en série.

8. Dispositif de mesure de débit qui soumet une résistance de génération de chaleur à une commande de chauffage et qui détecte un débit du fluide s'écoulant dans l'environnement de la résistance de génération de chaleur, comprenant :

le capteur de température d'air admis selon l'une quelconque des revendications 1 à 7 ; et

une unité d'ajustement de signal de débit d'air (18) qui ajuste la sortie de débit en utilisant une sortie du capteur de température d'air admis.

## FIG. 1

## FIG. 2

INTAKE TEMPERATURE (°C)

## FIG. 3

## FIG. 4

## FIG. 5

## FIG. 6

# FIG. 7

# FIG. 8

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005003596 A
- EP 2482050 A2
- US 6033109 A
- WO 9108441 A1